(19) Europäisches Patentamt
European Patent Office
Office européen des brevets

(11) **EP 1 603 264 B1**

(12) **FASCICULE DE BREVET EUROPEEN**

(45) Date de publication et mention
de la délivrance du brevet:
**27.02.2013 Bulletin 2013/09**

(51) Int Cl.:
*H04L 1/00* (2006.01)     *H04L 27/34* (2006.01)
*H04L 27/18* (2006.01)     *H04L 1/02* (2006.01)

(21) Numéro de dépôt: **04364041.6**

(22) Date de dépôt: **04.06.2004**

(54) **Procédé et dispositif de réception d'un signal ayant subi un précodage linéaire et un codage de canal**

Verfahren und Gerät zum Empfang von einem linear vorkodierten und kanalkodierten Signal

Method and system for receiving a linearly precoded and channel coded signal

(84) Etats contractants désignés:
**AT BE BG CH CY CZ DE DK EE ES FI FR GB GR HU IE IT LI LU MC NL PL PT RO SE SI SK TR**

(43) Date de publication de la demande:
**07.12.2005 Bulletin 2005/49**

(73) Titulaire: **France Télécom
75015 Paris (FR)**

(72) Inventeurs:
  • **Bouvet, Pierre-Jean
    35000 Rennes (FR)**
  • **Le Nir, Vincent
    35000 Rennes (FR)**
  • **Helard, Maryline
    35700 Rennes (FR)**

(74) Mandataire: **Vidon, Patrice
    Cabinet Vidon
    Technopole Atalante
    16B Rue de Jouanet
    BP 90333
    35703 Rennes Cedex 7 (FR)**

(56) Documents cités:
**EP-A1- 1 335 518**

• **DEBBAH M ET AL: "The spectral efficiency of linear precoders" PROCEEDINGS OF THE 2003 IEEE INFORMATION THEORY WORKSHOP, PARIS, FRANCE, 31 mars 2003 (2003-03-31), pages 90-93, XP010647721 IEEE, PISCATAWAY, NJ, USA**
• **YAN XIN ET AL: "High-rate layered space-time transmissions based on constellation-rotation" 2002 IEEE WIRELESS COMMUNICATIONS AND NETWORKING CONFERENCE RECORD, ORLANDO, FL, USA, vol. 1, 17 mars 2002 (2002-03-17), pages 471-476, XP010585811 IEEE, PISCATAWAY, NJ, USA**

**Description**

**1. Domaine de l'invention**

Le domaine de l'invention est celui des systèmes de communications numériques. Plus précisément, l'invention concerne la réception de signaux, reçus par l'intermédiaire d'un ou plusieurs canaux de transmission.

Plus précisément encore, l'invention concerne une technique itérative de réception d'un signal ayant subi, à l'émission, un codage de canal et un précodage linéaire.

L'invention s'applique notamment aux systèmes de communications numériques filaires (comme l'ADSL, de l'anglais « asymmetric digital subscriber line » pour « liaison numérique à débit asymétrique »), ainsi qu'aux systèmes de communications par voie hertzienne, présentant une ou plusieurs antennes à l'émission et/ou à la réception.

L'invention présente notamment une technique de réception adaptée aux systèmes mutliporteuses, tels que l'OFDM (de l'anglais « Orthogonal Frequency Division Multiplexing » pour « multiplexage par répartition orthogonale de la fréquence ») ou le MC-CDMA (de l'anglais « Multi-Carrier Code Division Multiplex Access » pour « accès multiple à répartition par code multiporteuse »), ainsi qu'aux systèmes mono-porteuse, ayant subis un précodage linéaire.

**2. Art antérieur**

Il existe différents types de récepteurs pour de tels systèmes ayant subi un précodage linéaire en émission.

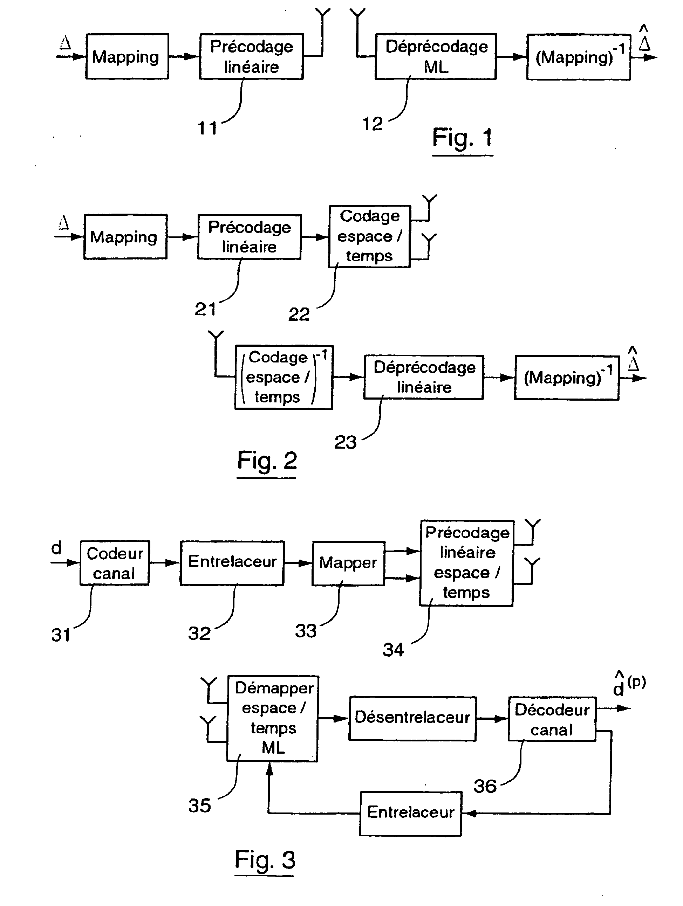

Ainsi, J. J. Boutros et E. Viterbo ("Signal space diversity, a power and bandwidth efficient diversity technique for the rayleigh fading channel", IEEE Trans. Commun., vol. 44, no. 4, pp 1453-1467, juillet 1998) proposent une technique de diversité d'espace des signaux, illustrée en figure 1, encore appelée précodage linéaire 11, et démontrent que des rotations multidimensionnelles de constellation d'émission permettent d'augmenter cette diversité sans accroître la bande du signal. Pour les canaux à évanouissements de type Rayleigh, cette augmentation de diversité se traduit par une amélioration des performances, en réception. Cependant, un tel système nécessite la mise en oeuvre d'un récepteur de type Maximum de Vraisemblance 12 (ou ML, de l'anglais « Maximum Likelihood »).

Un inconvénient de ces récepteurs de type Maximum de Vraisemblance est qu'ils sont complexes à mettre en oeuvre. En effet, la complexité de ces algorithmes augmente de façon exponentielle en fonction du nombre d'antennes et du nombre d'états de la modulation.

A. Stamoulis, Z. Liu et G. B. Giannakis, dans "Space-time block-coded with linear precoding for multirate services" (IEEE Trans. Signal Processing , vol. 50, no. 1, pp 119-129, janvier 2002), et V. Le Nir, M. Hélard et R. Legouable, dans "Technique de précodage et de codage espace-temps" (demande de brevet FR 02 16200, déposée le 16 décembre 2002 au nom du même Déposant) proposent d'associer ce précodage linéaire à des codes espaces-temps en bloc, en vue d'une transmission de type MIMO (« Multiple Input Multiple Output » pour « Entrées Multiples Sorties Multiples »).

Notamment, comme illustré en figure 2, V. Le Nir et al. proposent l'utilisation de matrices de précodage 21 qui, combinées avec des codes espace-temps orhogonaux 22 avant émission, admettent en réception un décodage linéaire 23, simplifiant la mise en oeuvre du récepteur.

Un inconvénient de ces techniques de l'art antérieur est qu'elles ne sont pas optimales en présence de codage de canal, du fait d'une interférence résiduelle après déprécodage. En effet, quel que soit l'algorithme de décodage utilisé (de type Maximum de Vraisemblance ou linéaire), cette interférence résiduelle n'est pas supprimée.

Par « déprécodage », on entend ici, et dans toute la suite du document, une opération sensiblement inverse de l'opération de précodage réalisée à l'émission.

Depuis peu, des techniques itératives de réception d'un signal précodé linéairement sont apparues. Ces techniques permettent d'améliorer les performances au niveau de la réception, lorsqu'un codage de canal est mis en oeuvre en émission.

Ainsi, J. J. Boutros, N. Bresset et L. Brunel ("Turbo coding and decoding for multiple antenna channels", International Symposium on Turbo Codes and Related topics, Brest, France, septembre 2003) ont introduit un système, présenté en figure 3, mettant en oeuvre un précodage linéaire associé à des modulations codées espace-temps (de l'anglais ST-BICM pour « Space-time bit-interleaved coded modulation ») dans une transmission MIMO. Le système consiste en la concaténation d'un codeur de canal 31, d'un entrelaceur 32, d'un convertisseur d'éléments binaires en symboles 33 (encore appelé « mapper »), permettant de démultiplexer chaque symbole sur les différentes antennes d'émissions, ainsi que d'un précodeur 34 agissant à la fois dans le domaine temporel et dans le domaine spatial.

En réception, le système met en oeuvre un « demapper » espace-temps 35 utilisant un algorithme de type ML, analysant notamment les rapports de vraisemblance LLR (de l'anglais « log likelihood ratio ») sur chaque bit codé. Un tel « demapper » met en oeuvre une opération sensiblement inverse à celle du « mapper ». Ces rapports de vraisemblance sont améliorés via un décodeur de canal 36 de type SOVA (de l'anglais « Soft Output Viterbi Algorithm » pour « algorithme de Viterbi à sortie souple ») et envoyés de nouveau au « demapper » 35. Ce processus est réitéré afin d'améliorer les données décodées $\hat{\mathbf{d}}^{(p)}$.

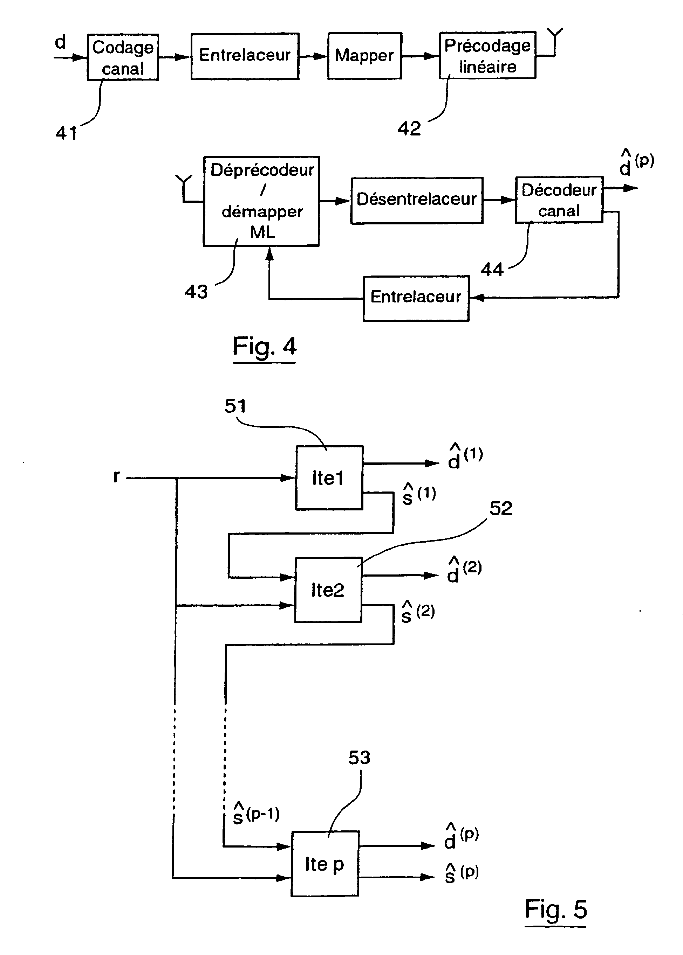

Z. Wang, S. Zhou et G. B. Giannakis présentent également, dans "Joint coding-precoding with low complexity turbo-decoding" (IEEE transactions on wireless communications, Vol.3, No.3, mai 2004), un récepteur itératif pour un système combinant à l'émission codage de canal 41 et précodage linéaire 42, comme illustré en figure 4. Le récepteur est basé sur un échange d'information extrinsèque entre un déprécodeur associé à un « demapper » 43 de type maximum de vraisemblance, et un décodeur de canal 44.

Ces deux systèmes itératifs permettent de réaliser conjointement le déprécodage et le décodage de canal à l'intérieur d'une boucle itérative, de façon à s'approcher des performances optimales.

Par ailleurs, M. Debbah, P. Loubaton et M. de Courville présentent, dans "The Spectral Efficiency of Linear Precoders" (Proceedings of the IEEE Information Theory Workshop, Paris, France, 31.03.2003 -04.04.2003) un algorithme à annulation successive d'interférence, dont l'idée est de détecter successivement les symboles précédés et de retirer au fur et à mesure l'interférence causée par ceux-ci sur le reste du signal.

Cependant, un inconvénient de ces techniques itératives de l'art antérieur est leur complexité de mise en oeuvre, du fait de l'utilisation d'un algorithme de type maximum de vraisemblance en réception. En effet, la complexité d'un tel algorithme est exponentiellement proportionnelle à l'ordre de la modulation et à la taille du précodage (ou des matrices de précodage).

D'autres techniques de réception d'un signal ayant subi avant émission un codage de canal et un précodage linéaire sont également connues.

Cependant, ces techniques ne permettent généralement pas d'annuler, ou à tout le moins de diminuer, à la fois les interférences dues au précodage, dues au codage de canal, ou encore dues à un codage espace-temps, avec une complexité acceptable.

## 3. Objectifs de l'invention

L'invention a notamment pour objectif de pallier ces inconvénients de l'art antérieur.

Plus précisément, un objectif de l'invention est de fournir une technique de réception d'un signal dans un système comprenant à l'émission au moins un codage de canal et un précodage linéaire.

Un autre objectif de l'invention est de proposer une telle technique qui soit efficace et simple à mettre en oeuvre.

Notamment, un objectif de l'invention est de fournir une technique de complexité linéaire, permettant ainsi d'utiliser des matrices de précodage de grande taille.

L'invention a encore pour objectif de proposer une technique permettant d'annuler, ou au moins de réduire, les interférences résiduelles après déprécodage.

Encore un autre objectif de l'invention est de fournir une telle technique permettant de réaliser conjointement le déprécodage, l'égalisation et le décodage de canal à l'intérieur d'une même boucle itérative

## 4. Caractéristiques essentielles de l'invention

Ces objectifs, ainsi que d'autres qui apparaîtront par la suite, sont atteints à l'aide d'un procédé de réception d'un signal de données ayant subi, avant émission, un précodage linéaire, à l'aide d'une matrice de précodage unitaire, et un codage de canal.

Selon l'invention, un tel procédé comprend au moins une itération d'amélioration d'une estimation du signal reçu, en fonction du signal reçu et d'une estimation précédente du signal reçu. L'itération d'amélioration comprend les étapes suivantes :

- estimation de l'interférence due notamment au précodage linéaire et affectant le signal reçu, en fonction de ladite estimation précédente, de façon à obtenir une interférence estimée ;
- soustraction de ladite interférence estimée au signal reçu, préalablement filtré et déprécodé, de façon à obtenir un signal amélioré ;
- égalisation dudit signal amélioré, délivrant un signal égalisé ;
- estimation du signal reçu, délivrant une estimation du signal reçu.

Ainsi, l'invention repose sur une approche tout à fait nouvelle et inventive de la réception d'un signal dans un système comprenant à l'émission une étape de codage de canal et une étape de précodage linéaire, dans un contexte de transmission à une ou plusieurs entrées en émission et à une ou plusieurs sorties en réception. En effet, l'invention s'applique aussi bien aux communications filaires (quelque soit le support de transmission, par exemple métallique ou optique) qu'aux communications sans fil.

On rappelle qu'on entend ici, et dans toute la suite du document, par « déprécodage » une opération inverse de l'opération de précodage réalisée à l'émission.

En effet, l'utilisation d'un précodage linéaire en émission permet de meilleures performances en réception, puisqu'il fournit un gain en diversité. Cependant ce précodage introduit des interférences, qu'il faut supprimer en réception.

L'invention propose ainsi, en réception, de reconstruire ces interférences au cours d'une étape d'estimation de l'interférence, pour ensuite les soustraire au signal reçu, permettant d'obtenir un signal amélioré.

Cette étape d'estimation de l'interférence se fait de manière itérative, en prenant en compte une estimation précédente.

Le signal amélioré est ensuite égalisé, puis estimé. Cette estimation du signal sert ensuite à la prochaine itération d'amélioration.

Le récepteur ainsi utilisé est plus simple à mettre en oeuvre, puisqu'il n'utilise pas d'algorithme de type maximum de vraisemblance. Il permet ainsi l'utilisation, en émission, de matrices de précodage de taille supérieure, permettant d'obtenir, en réception, de meilleures performances de transmission.

Ainsi, la technique proposée permet de réaliser conjointement, tout en conservant un récepteur à complexité linéaire, une étape d'égalisation et de déprécodage, et une étape de décodage de canal dans le cas d'une transmission MIMO, et/ou une étape de décodage spatio-temporel et de déprécodage et une étape de décodage de canal, dans le cas de la mise en oeuvre de codes espace-temps.

Avantageusement, l'étape d'estimation de l'interférence met en oeuvre une multiplication de ladite estimation précédente par une matrice d'interférences tenant compte notamment d'une matrice transposée conjuguée d'une matrice représentative du canal de transmission dudit signal reçu et d'une matrice transposée conjuguée de ladite matrice de précodage.

La matrice représentative du canal de transmission, encore appelée matrice équivalente de canal, peut notamment prendre en compte un multiplexage spatial et/ou temporel mis en oeuvre à l'émission. Cette matrice est diagonale dans le cas d'un système SISO, et pleine dans le cas d'un système MIMO.

Cette matrice peut également être diagonale par blocs.

Dans un système de type MIMO, elle prend notamment en compte l'interférence entre symboles due aux différents trajets dans le canal de propagation.

De manière préférentielle, le filtrage du signal reçu est mis en oeuvre par multiplication dudit signal reçu par une matrice de filtrage transposée conjuguée d'une matrice représentative notamment du canal de transmission.

Selon un mode de réalisation avantageux, l'estimation précédente est délivrée par l'itération précédente pour toutes les itérations sauf la première, et par une étape d'estimation préliminaire pour la première itération.

La première itération ne nécessite pas de connaître une estimation précédente pour être mise en oeuvre. Il s'agit d'une étape d'initialisation.

Notamment, selon une première variante de réalisation, cette première itération met en oeuvre une étape d'estimation préliminaire comprenant les étapes suivantes :

- égalisation globale, par multiplication dudit signal reçu par une matrice d'égalisation globale diagonalisée, représentative du canal de transmission dudit signal reçu et de ladite matrice de précodage ;
- estimation dudit signal reçu, délivrant une estimation du signal reçu.

Selon une deuxième variante de réalisation, la première itération met en oeuvre une étape d'estimation préliminaire comprenant les étapes suivantes :

- égalisation de canal, par multiplication dudit signal reçu par une matrice transposée conjuguée d'une matrice représentative du canal de transmission dudit signal reçu, délivrant un signal égalisé ;
- déprécodage, par multiplication dudit signal égalisé par une matrice transposée conjuguée de ladite matrice de précodage ;
- estimation dudit signal reçu, délivrant une estimation du signal reçu.

De façon avantageuse, au moins une desdites étapes d'estimation du signal reçu délivre d'une part une estimation binaire dudit signal reçu, et d'autre part une estimation pondérée dudit signal reçu, ladite estimation pondérée étant utilisée pour l'itération suivante, si cette dernière existe.

Notamment, lesdites étapes d'estimation comprennent au moins certaines des opérations suivantes :

- « mapping » ;
- désentrelacement ;
- décodage de canal ;
- ré-entrelacement ;
- « mapping » souple.

On entend ici par « mapping » la conversion d'éléments binaires en symboles complexes.

Selon un mode de réalisation avantageux, le signal reçu est émis par et/ou est reçu sur au moins deux antennes.

L'invention s'applique ainsi aux systèmes MIMO.

Notamment, le signal reçu peut avoir subi, à l'émission, un codage espace-temps, et le procédé peut mettre en oeuvre un décodage de canal à l'aide d'une matrice pleine.

De manière préférentielle, le procédé met en oeuvre, pour au moins une itération, une estimation du canal tenant compte d'au moins une des estimations précédentes.

Ainsi, l'estimation du signal reçu à chaque itération permet notamment d'estimer le canal de propagation.

L'invention s'applique également avantageusement aux systèmes multi-utilisateurs de type MC-CDMA.

Dans un tel système, l'étape d'estimation des interférences nécessite une connaissance de l'estimation précédente de chacun des utilisateurs. De nouveau, l'estimation précédente de chacun des utilisateurs est fournie par l'itération précédente.

L'invention concerne également un dispositif de réception mettant en oeuvre le procédé décrit ci-dessus.

Selon l'invention, un tel dispositif comprend des moyens d'amélioration d'une estimation du signal reçu, en fonction dudit signal reçu et d'une estimation précédente dudit signal reçu, mettant en oeuvre au moins une fois, sous la forme d'une itération :

- des moyens d'estimation de l'interférence due notamment audit précodage linéaire et affectant ledit signal reçu, en fonction de ladite estimation précédente, de façon à obtenir une interférence estimée ;
- des moyens de soustraction de ladite interférence estimée audit signal reçu, préalablement filtré et déprécodé, de façon à obtenir un signal amélioré ;
- des moyens d'égalisation dudit signal amélioré, délivrant un signal égalisé ;
- des moyens d'estimation dudit signal reçu, délivrant une estimation du signal reçu.

L'invention concerne encore un produit programme d'ordinateur mettant en oeuvre un procédé de réception tel que décrit précédemment.

## 5. Liste des figures

D'autres caractéristiques et avantages de l'invention apparaîtront plus clairement à la lecture de la description suivante d'un mode de réalisation préférentiel, donné à titre de simple exemple illustratif et non limitatif, et des dessins annexés, parmi lesquels :

- les figures 1 et 2, déjà commentées en relation avec l'art antérieur, présentent une chaîne de transmission d'un signal précodé linéairement ;
- les figures 3 et 4, également commentées en relation avec l'art antérieur, présentent une chaîne de transmission d'un signal précodé linéairement après codage de canal, mettant en oeuvre une technique de réception itérative permettant de supprimer en partie les interférences dues au codage de canal ;
- la figure 5 illustre le principe général de la technique de réception itérative selon l'invention ;
- les figures 6A et 6B présentent deux variantes de mise en oeuvre de l'étape d'estimation préliminaire de la figure 5 ;
- la figure 7 présente plus en détail une itération d'amélioration de la figure 5;
- les figures 8A, 8B, 8C et 8D présentent différents modes de réalisation de l'invention dans un contexte multi-antennes ;
- les figures 9A et 9B présentent les performances de l'invention par rapport aux solutions de l'art antérieur pour un système SISO et pour un système MIMO ;
- les figures 10A, 10B et 10C illustrent l'application du procédé itératif de la figure 5 à un système mutli-utilisateurs.

## 6. Description d'un mode de réalisation de l'invention

Le principe général de l'invention repose sur une technique de réception itérative d'un signal ayant subi avant émission un codage de canal et un précodage linéaire, mettant en oeuvre une estimation itérative des interférences engendrées pas le codage de canal et le précodage. L'interférence estimée, reconstruite à partir d'une estimation précédente, est ensuite soustraite au signal reçu, de manière à éliminer sa contribution.

Comme illustré en figure 5, un récepteur mettant en oeuvre un tel procédé de réception comprend un premier module d'estimation préliminaire 51, permettant de délivrer une première estimation, et (*p-1*) modules élémentaires (52, 53), permettant d'améliorer l'estimation du signal reçu à chaque itération.

On utilise notamment, dans toute la suite du document, les notations et défintions suivantes :

- *d* vecteur de bits émis ;
- $\Theta$ matrice de précodage ;
- *H* matrice du canal ;
- $G = \Theta^H \cdot H^H \cdot H \cdot \Theta$ matrice globale ;
- *J = G - diag(G)* matrice d'interférences ;
- $\hat{s}^{(p)}$ estimation pondérée à l'itération *p* du signal reçu ;
- $\hat{d}^{(p)}$ estimation binaire à l'itération *p* du signal reçu ;
- *r* signal reçu ;
- $\sigma$ variance du bruit.

On considère ainsi que le signal *d* est émis après précodage linéaire et codage de canal. Un tel précodage linéaire met notamment en oeuvre un produit matriciel des vecteurs du signal à émettre par la matrice $\Theta$ de précodage linéaire.

A la réception, le signal reçu *r* entre dans le premier module d'estimation Ite*1* 51, correspondant à la première itération, mettant en oeuvre une étape d'estimation préliminaire.

Dans ce mode de réalisation préférentiel, cette étape d'estimation préliminaire délivre, au cours d'une première itération, d'une part une estimation binaire $\hat{d}^{(1)}$ du signal reçu, et d'autre part une estimation pondérée $\hat{s}^{(1)}$ du signal reçu. L'estimation binaire correspond en fait à une décision dure des bits du signal estimé, tandis que l'estimation pondérée correspond à une estimation souple de ces mêmes bits.

L'estimation pondérée $\hat{s}^{(1)}$ du signal reçu est ensuite utilisée dans le module élémentaire Ite2 52, au cours d'une deuxième itération.

Ce module élémentaire Ite2 52 prend en compte le signal reçu *r* et l'estimation pondérée $\hat{s}^{(1)}$ précédente pour délivrer à son tour une estimation du signal reçu, comprenant d'une part une estimation binaire $\hat{d}^{(2)}$ du signal reçu, et d'autre part une estimation pondérée $\hat{s}^{(2)}$ du signal reçu.

On réitère cette opération *p* fois. On obtient ainsi, à la fin de l'itération *p-1*, une estimation pondérée $\hat{s}^{(p-1)}$ du signal reçu, que l'on peut réinjecter dans le denier module élémentaire Ite*p* 53.

Comme précédemment, ce module élémentaire Ite*p* 53 prend en compte le signal reçu *r* et l'estimation pondérée $\hat{s}^{(p-1)}$ précédente pour délivrer une estimation du signal reçu, comprenant une estimation binaire $\hat{d}^{(p)}$ et une estimation pondérée $\hat{s}^{(p)}$ du signal reçu.

En réinjectant ainsi l'estimation pondérée précédente dans chacune des itérations, on obtient un signal estimé de meilleure qualité, les interférences dues notamment au codage de canal et au précodage linéaire étant supprimées, ou à tout le moins réduites.

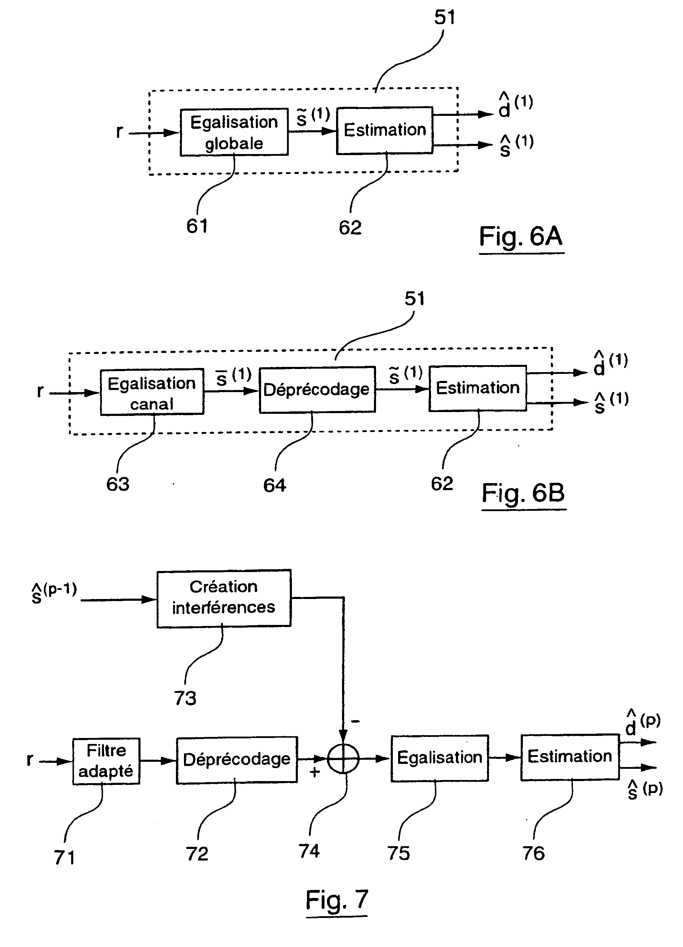

On présente maintenant, en relation avec les figures 6A et 6B, deux variantes de réalisation du premier module d'estimation Ite*1* 51.

Selon une première variante, illustrée en figure 6A, l'étape d'estimation préliminaire met en oeuvre une sous-étape d'égalisation globale 61 du signal reçu *r*, suivie d'une sous-étape d'estimation 62 du signal reçu.

La sous-étape d'égalisation 61 met notamment en oeuvre une multiplication du signal reçu *r* par une matrice d'égalisation globale *G* que l'on cherche à diagonaliser, tenant compte au moins de la matrice du canal *H* et de la matrice de précodage $\Theta$ utilisée à l'émission. Cette sous-étape d'égalisation 61 délivre un signal déprécodé égalisé $\tilde{s}^{(1)}$ :

$$\tilde{s}^{(1)} = \left[\left(G + \sigma^2 I\right)^{-1} \cdot \Theta^H \cdot H^H\right] \cdot r$$

On considère notamment, selon le mode de réalisation préférentiel décrit ici, que $G = \Theta^H \cdot H^H \cdot H \cdot \Theta$, où $^H$ correspond à une opération de transposée conjuguée.

Le signal déprécodé égalisé $\tilde{s}^{(1)}$ est ensuite estimé, au cours de la sous-étape d'estimation 62 du signal reçu. Cette estimation délivre notamment à la fois une estimation binaire $\hat{d}^{(1)}$ du signal reçu, correspondant au signal binaire estimé, et une estimation pondérée $\hat{s}^{(1)}$ du signal reçu, correspondant au signal pondéré estimé.

Selon une deuxième variante de réalisation du premier module d'estimation Ite*1* 51, illustrée en figure 6B, l'étape d'estimation préliminaire met en oeuvre une sous-étape d'égalisation du canal 63, suivie d'une sous-étape de déprécodage 64, puis de la sous-étape d'estimation 62 du signal reçu, présentée dans la première variante de réalisation.

La sous-étape d'égalisation du canal 63 met notamment en oeuvre une multiplication du signal reçu *r* par une matrice tenant compte de la matrice de canal *H,* et notamment du bruit, délivrant un signal égalisé $\tilde{s}^{(1)}$ :

$$\bar{s}^{(1)} = \left[\left(H^H H + \sigma^2 \breve{I}\right)^{-1} \cdot \breve{H}^H\right] \cdot r$$

Le signal égalisé $\bar{s}^{(1)}$ est ensuite déprécodé au cours de la sous-étape de déprécodage 64, par multiplication avec la matrice $\Theta^H$, correspondant à la matrice transposée conjuguée de la matrice de précodage $\Theta$ utilisée en émission. On obtient ainsi un signal déprécodé égalisé $\tilde{s}^{(1)}$, tel que :

$$\tilde{s}^{(1)} = \Theta^H \cdot \bar{s}^{(1)}$$

De nouveau, le signal déprécodé égalisé $\tilde{s}^{(1)}$ est estimé au cours de la sous-étape d'estimation 62 du signal reçu, délivrant une estimation binaire $\hat{d}^{(1)}$ et une estimation pondérée $\hat{s}^{(1)}$ du signal reçu.

Ces deux variantes de réalisation présentent des performances comparables. Cependant, la deuxième variante de réalisation reste plus simple à mettre en oeuvre.

On peut ainsi remarquer que dans le cas d'une transmission SISO (« Single Input Single Output » pour « Entrée Unique Sortie Unique »), la matrice de canal $H$ est une matrice diagonale. L'inversion de la matrice se réduit alors à une inversion scalaire. Dans le cas d'une transmission MIMO, la matrice de canal $H$ est une matrice pleine.

Par ailleurs, la matrice de précodage $\Theta$ étant unitaire, la matrice de précodage transposée et conjuguée $\Theta^H$ correspond à la matrice $\Theta^{-1}$, inverse de la matrice de précodage $\Theta$.

On présente maintenant, en relation avec la figure 7, une itération d'amélioration mise en oeuvre dans un module élémentaire (52, 53).

Comme décrit précédemment en regard de la figure 5, chaque module élémentaire présente en entrée le signal reçu $r$ et une estimation pondérée délivrée par le module élémentaire précédent.

Ainsi, à l'itération $p$, le module élémentaire Ite$p$ 53 comprend en entrée le signal reçu $r$ et l'estimation pondérée $\hat{s}^{(p-1)}$.

On rappelle que la première estimation est fournie par le premier module d'estimation Ite$1$ 51, au cours d'une étape d'estimation préliminaire.

Le signal reçu $r$ est tout d'abord filtré au cours d'une étape de filtrage 71, délivrant un signal filtré. Cette étape revient à multiplier le signal reçu $r$ par la matrice transposée conjuguée du canal $H^H$.

On remarque que la matrice de canal est une matrice diagonale dans le cas d'un système SISO, et une matrice pleine dans le cas d'un système MIMO. Cette notion de matrice équivalente de canal inclut également un éventuel codage espace-temps du signal émis, et notamment un codage par bloc.

Le signal filtré est ensuite déprécodé, au cours d'une étape de déprécodage 72, pour former un signal déprécodé. On applique pour se faire au signal filtré la matrice $\Theta^H$, correspondant à la matrice transposée conjuguée de la matrice $\Theta$ de précodage utilisée à l'émission.

Le module élémentaire Ite$p$ 53 met également en oeuvre une étape 73 d'estimation de l'interférence, notamment due au codage de canal et au précodage linéaire.

Cette étape d'estimation de l'interférence 73 tient compte d'une estimation précédente, soit l'estimation pondérée $\hat{s}^{(p-1)}$ pour l'itération $p$, et met en oeuvre une multiplication de l'estimation précédente par une matrice d'interférences $J$.

Cette matrice d'interférences $J$ tient compte au moins de la matrice transposée conjuguée $H^H$ de la matrice de canal $H$ et de la matrice transposée conjuguée $\Theta^H$ de la matrice $\Theta$ de précodage.

On considère notamment $J = G - diag(G)$, avec $G = \Theta^H \cdot H^H \cdot H \cdot \Theta$.

Cette interférence, une fois estimée au cours de l'étape 73, est alors soustraite au signal déprécodé, au cours d'une étape de soustraction 74, délivrant un signal amélioré.

Ce signal amélioré est ensuite égalisé par multiplication du signal amélioré par une matrice tenant compte du canal de propagation, et notamment du bruit, et du précodage $(diag(G)+\sigma^2 I)^{-1}$ au cours d'une étape d'égalisation 75. Le signal égalisé est ensuite estimé au cours d'une étape d'estimation 76.

Cette étape d'estimation 76 délivre notamment à la fois une estimation binaire $\hat{d}^{(p)}$ du signal reçu, correspondant au signal binaire estimé, et une estimation pondérée $\hat{s}^{(p)}$ du signal reçu, correspondant au signal pondéré estimé.

On remarque que l'étape d'estimation 76 peut également mettre en oeuvre des sous-étapes de « mapping », de désentrelacement, de décodage de canal, de ré-entrelacement, ou encore de « mapping » pondéré.

On rappelle qu'on entend ici par « mapping » la conversion d'éléments binaires en symboles complexes.

L'estimation du signal binaire et/ou du signal pondéré à chaque itération permet également d'estimer le canal de transmission. Ainsi, en tenant compte des estimations précédentes des itérations précédentes, l'estimation du canal peut être améliorée.

Le procédé de réception présenté peut notamment être mis en oeuvre dans des systèmes à multiplexage spatial, de type MIMO, et/ou dans des systèmes à multiplexage temporel. La matrice de canal $H$ est alors choisie de sorte à représenter les différents sous-canaux MIMO et/ou le codage spatio-temporel.

Ainsi, un tel procédé de réception peut être mis en oeuvre dans des systèmes présentant des codes espace-temps généralisés (de l'anglais « LD codes »), pouvant inclure à la fois le principe du codage espace-temps et celui du multiplexage spatial. La matrice de canal $H$ considérée représente alors à la fois le codage espace-temps et le multiplexage spatial.

L'invention considérée peut également être mise en oeuvre dans un système multi-utilisateurs, de type MC-CDMA.

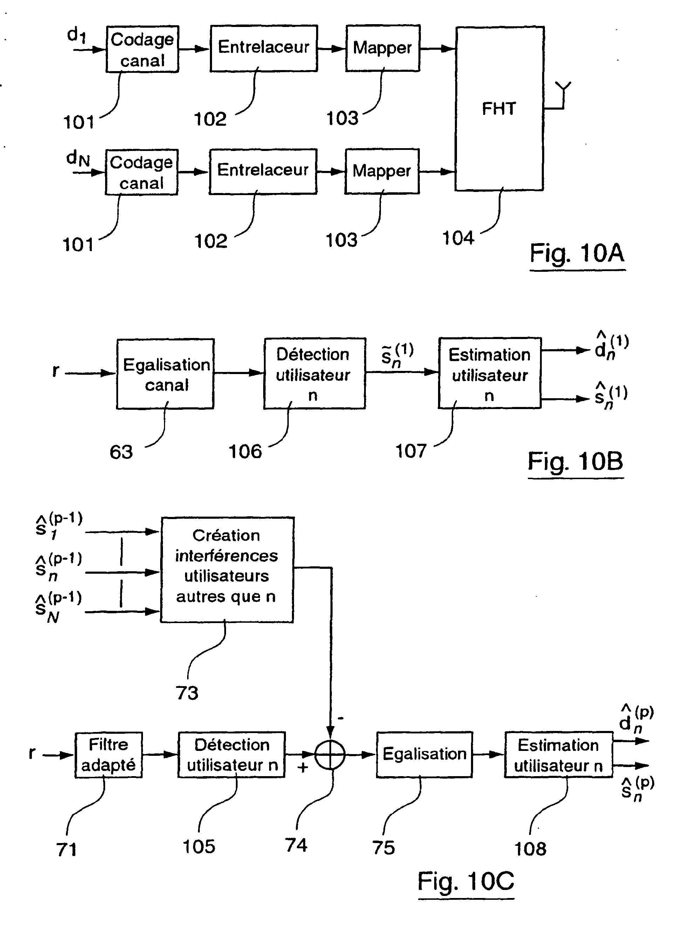

Ainsi, à l'émission, comme illustré en figure 10A, le dispositif d'émission comprend un codeur de canal 101, un entrelaceur 102 et un « mapper » 103, permettant de convertir les éléments binaires en symboles, pour chaque utilisateur 1 à N.

Les signaux provenant des différents utilisateurs sont ensuite multiplexés au cours d'une étape 104, mettant en oeuvre une transformée de Hadamard rapide (de l'anglais « Fast Hadamard transform » FHT), bien connue de l'Homme du Métier.

En réception, le processus itératif mis en oeuvre est sensiblement identique au processus détaillé en regard des figures 5 à 7.

Comme illustré en figure 10B, l'étape d'estimation préliminaire, pour chacun des N utilisateurs, est mise en oeuvre dans un premier module d'estimation, et comprend une sous-étape d'égalisation du canal 63, suivie d'une sous-étape de déprécodage 106, puis d'une sous-étape d'estimation 107 du signal reçu par l'utilisateur $n$. Dans le cas d'un système MC-CDMA, la sous-étape de déprécodage 106 correspond à une étape de détection d'un utilisateur $n$ (pour $n$ entier et $1 \le n \le N$).

La sous-étape d'égalisation du canal 63 met notamment en oeuvre une multiplication du signal reçu $r$ par une matrice tenant compte de la matrice de canal $H$, et notamment du bruit, délivrant un signal égalisé $\bar{s}^{(1)}$ :

$$\bar{s}^{(1)} = \left[ \left( H^H H + \sigma^2 I \right)^{-1} \cdot H^H \right] \cdot r$$

Le signal égalisé $\bar{s}^{(1)}$ est ensuite multiplié par la n-ième ligne de la matrice $\Theta^H$ correspondant à l'utilisateur $n$, notée $(\Theta^H)_n$, la matrice $\Theta^H$ correspondant à la matrice transposée conjuguée d'une matrice de précodage $\Theta$ utilisée en émission. On obtient ainsi un signal déprécodé égalisé $\tilde{s}_n^{(1)}$, tel que :

$$\tilde{s}_n^{(1)} = \left( \Theta^H \right)_n \cdot \bar{s}^{(1)}$$

Le signal déprécodé égalisé $\tilde{s}_n^{(1)}$ est ensuite estimé au cours de la sous-étape d'estimation 107 du signal reçu, délivrant une estimation binaire $\hat{d}_n^{(1)}$ et une estimation pondérée $\hat{s}_n^{(1)}$ du signal reçu par l'utilisateur $n$.

Comme illustré en figure 10C, et comme décrit précédemment en regard de la figure 5, chaque module élémentaire présente en entrée le signal reçu $r$ et une estimation pondérée délivrée par le module élémentaire précédent. La figure 10C illustre un tel module élémentaire $p$ pour l'utilisateur $n$.

Le signal reçu $r$ est tout d'abord filtré, au cours d'une étape 71. L'étape de déprécodage 72 de la figure 7 est, dans le cas d'un système multi-utilisateur, remplacée par une étape 105 de détection mono-utilisateur, permettant d'estimer de façon indépendante chaque utilisateur. Cette étape 105 de détection met en oeuvre une multiplication du signal reçu filtré par la n-ième ligne de la matrice de déprécodage $\Theta^H$ correspondant à l'utilisateur $n$, notée $(\Theta^H)_n$, et fournit un signal déprécodé.

Dans le cas d'un système multi-utilisateur, l'estimation pondérée précédente $p$-1 entrant dans un module élémentaire $p$ comprend la contribution des estimations précédentes $p$-1 de tous les utilisateurs (N utilisateurs dans cet exemple). Ainsi, la matrice d'interférences $J$ mise en oeuvre permet de reconstruire les interférences générées par les utilisateurs autres que l'utilisateur $n$. Cette matrice prend notamment en compte, à l'itération $p$, les estimations pondérées précédentes $\hat{s}_1^{(p-1)}, \dots \hat{s}_n^{(p-1)}, \dots, \hat{s}_N^{(p-1)}$, fournies par l'itération précédente $p$-1.

Ces interférences, une fois estimées au cours de l'étape 73, sont alors soustraites au signal déprécodé au cours d'une étape 74, pour fournir un signal amélioré. Ce signal amélioré est ensuite égalisé, puis estimé au cours d'une étape d'estimation 108.

Cette étape d'estimation 108 délivre notamment à la fois une estimation binaire $\hat{d}_n^{(p)}$ du signal reçu par l'utilisateur $n$, correspondant au signal binaire estimé, et une estimation pondérée $\hat{s}_n^{(p)}$ du signal reçu par l'utilisateur $n$, correspondant au signal pondéré estimé.

Il est également possible d'utiliser une telle technique itérative dans un système MC-CDMA mettant en oeuvre plusieurs antennes en émission et/ou en réception et/ou un codage espace-temps.

L'invention peut également s'appliquer aux systèmes mettant en oeuvre des modulations codées par treillis (ou TCM de l'anglais « Trellis Coded Modulation »).

Il est encore possible d'améliorer les performances du procédé itératif selon l'invention en mettant en oeuvre un contrôle automatique de gain (CAG), avant ou après l'étape d'égalisation (61, 63) dans un premier module d'estimation et/ou lors des itérations dans au moins un des modules élémentaires.

Le CAG a notamment pour but de normaliser l'énergie du signal pour la rendre unitaire, et de minimiser la propagation d'erreurs dans les itérations.

Ainsi, un signal $x_k$ en entrée d'un tel CAG est transformé en un signal $y_k$ de la façon suivante :

$$y_k = \alpha_k \cdot x_k$$

Le coefficient $\alpha_k$ peut notamment être déterminé par :

$$\begin{cases} G_k = G_{k-1} + \mu\left(1 - |y_k|^2\right) \\ \alpha_k = \sqrt{G_k} \end{cases}$$

où $\mu$ est le pas d'adaptation.

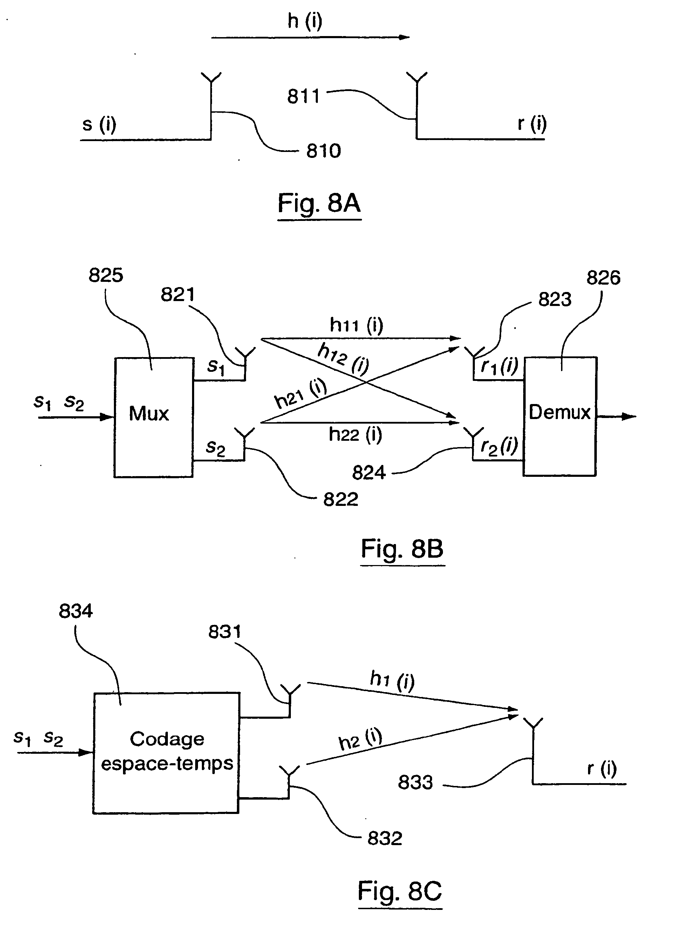

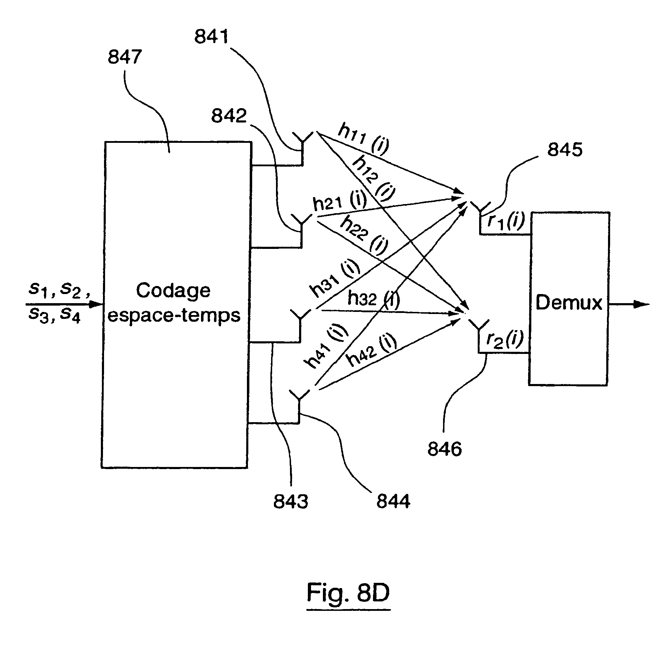

On présente désormais en relation avec les figures 8A, 8B, 8C et 8D différents modes de mise en oeuvre d'un tel procédé de réception.

On considère, pour ces différentes modes proposés, que la matrice de précodage $\Theta$ est une matrice par blocs de la forme :

$$\Theta_L = \sqrt{\frac{2}{L}} \cdot \begin{bmatrix} \Theta_{L/2} & \Theta_{L/2} \\ \Theta_{L/2} & -\Theta_{L/2} \end{bmatrix}$$

avec

$$\Theta_2 = \begin{bmatrix} e^{j\vartheta_1}\cos\eta & e^{j\vartheta_2}\sin\eta \\ -e^{-j\vartheta_2}\sin\eta & e^{-j\vartheta_1}\cos\eta \end{bmatrix}$$

et

$$\eta = \frac{\pi}{4} + k\frac{\pi}{2}, \quad \vartheta_2 = \vartheta_1 - \frac{\pi}{2},$$

et pour $i \in [1,2]$,

$$\vartheta_i = \frac{\pi}{4} + k'\frac{\pi}{2}$$

où k, k' sont des entiers relatifs.

Les paramètres $\eta$, $\vartheta_1$ et $\vartheta_2$ sont notamment optimisés si :

$$\eta = \pi/4$$

$$\vartheta_1 = 5\pi/4$$

$$\vartheta_2 = 3\pi/4$$

On considère ici, et pour les différents modes de réalisation décrits par la suite, que le système de transmission comprend, côté émetteur, un codage de canal et un précodage de longueur $L$, mis en oeuvre à partir de la matrice de précodage $\Theta_L$.

On note de nouveau $H$ la matrice de canal équivalente et $r$ le signal reçu, ces deux paramètres étant utilisés par le système itératif.

On présente ainsi en figure 8A un système de type SISO, comprenant une seule antenne d'émission 810 et une seule antenne de réception 811. Au temps symbole $i$, l'antenne d'émission 810 émet un symbole $s(i)$, à travers un canal de propagation représenté par le coefficient $h(i)$.

Le symbole reçu $r(i)$, affecté par le canal de propagation, est de la forme : $r(i) = s(i) * h(i)$.

La matrice de canal $H$ équivalente utilisée par le récepteur itératif est alors une matrice diagonale (car le système est de type SISO), de la forme :

$$H = \begin{bmatrix} h(i) & 0 & 0 & 0 \\ 0 & h(i+1) & 0 & 0 \\ \vdots & 0 & \ddots & \vdots \\ 0 & 0 & \cdots & h(i+L-1) \end{bmatrix}.$$

On présente maintenant en figure 8B un système de type MIMO, présentant deux antennes d'émission (821, 822) et deux antennes de réception (823, 824). Le système comprend alors, côté émission, un multiplexeur 825 permettant de réaliser le multiplexage spatial, et, côté réception, un démultiplexeur 826. La matrice de canal $H$ est également choisie de sorte à représenter le multiplexage spatial (soit les différents sous-canaux du système MIMO).

On note $h_{mn}(i)$ le coefficient du canal entre la $m$-ième antenne d'émission et la $n$-ième antenne de réception au temps symbole $i$.

Ainsi, au temps symbole $i$, deux symboles $s_1(i)$ et $s_2(i)$ sont envoyés simultanément sur les deux antennes d'émission (821, 822). On peut également représenter le multiplexage spatial par le tableau suivant, en considérant Ts un temps symbole :

| | Antenne 821 | Antenne 822 |
|---|---|---|
| t = $i$Ts | $s_1$ | $s_2$ |

La matrice de canal $H$ équivalente utilisée par le récepteur itératif est alors de la forme :

$$H = \begin{bmatrix} h_{11}(i) & h_{12}(i) & 0 & \cdots & & 0 \\ h_{21}(i) & h_{22}(i) & 0 & \cdots & & 0 \\ 0 & \ddots & \ddots & & & \vdots \\ \vdots & \ddots & \ddots & h_{11}(i+L/2-1) & h_{12}(i+L/2-1) \\ 0 & 0 & \cdots & h_{21}(i+L/2-1) & h_{22}(i+L/2-1) \end{bmatrix}, \text{ avec } H \in C^{L \times L}$$

Le vecteur $r$ utilisé dans le procédé itératif de réception, correspondant au signal reçu, est alors de la forme :

$$r = \begin{bmatrix} r_1(i) & r_2(i) & \cdots & r_1(i+L/2-1) & r_2(i+L/2-1) \end{bmatrix}^T \text{ avec } r \in C^{L \times 1}$$

On se place maintenant dans le cas d'un système MISO, comme présenté en figure 8C.

Ce système présente deux antennes d'émission (831, 832) et une seule antenne de réception (833). Ce système met également en oeuvre, côté émission, un codage espace-temps 834, par exemple de type Alamouti.

On note $h_m(i)$ le coefficient du canal entre la $m$-ième antenne d'émission et l'antenne de réception au temps symbole $i$. On suppose également que le canal est constant sur deux temps symboles consécutifs à savoir :

$$\begin{cases} h_1(i) = h_1(i+1) \\ et \\ h_2(i) = h_2(i+1) \end{cases} \quad i \in \begin{bmatrix} \cdots, -4, -2, 0, 2, 4, \cdots \end{bmatrix}$$

On peut notamment représenter le codage espace-temps par le tableau suivant, en considérant Ts un temps symbole :

|  | Antenne 831 | Antenne 832 |
|---|---|---|
| t = $i$Ts | $s_1$ | $s_2$ |
| t= ($i$+1)Ts | $-s_2^{*}$ | $s^{*}_1$ |

La matrice de canal $H$ équivalente utilisée par le récepteur itératif est alors de la forme :

$$H = \begin{bmatrix} h_1(i) & h_2(i) & 0 & \cdots & & 0 \\ h_2^{*}(i+1) & -h_1^{*}(i+1) & 0 & \cdots & & 0 \\ 0 & \ddots & \ddots & & & \vdots \\ \vdots & \ddots & \ddots & h_1(i+L-2) & h_2(i+L-2) \\ 0 & 0 & \cdots & h_2^{*}(i+L-1) & -h_1^{*}(i+L-1) \end{bmatrix} \text{ avec } H \in C^{L \times L}$$

Le vecteur $r$ utilisé dans le procédé itératif de réception, correspondant au signal reçu, est alors de la forme :

$$r = \begin{bmatrix} r(i) & -r^{*}(i+1) & \cdots & r(i+L-2) & r^{*}(i+L-1) \end{bmatrix}^T \text{ avec } r \in C^{L \times 1}$$

On se place finalement dans le cas d'un système MIMO présentant un multiplexage temporel, comme présenté en figure 8D.

Ce système présente quatre antennes d'émission (841, 842, 843, 844) et deux antennes de réception (845, 846). Le système met également en oeuvre, côté émission, un codage espace-temps 847.

On note $h_{mn}(i)$ le coefficient du canal entre la $m$-ième antenne d'émission et la n-ième antenne de réception au temps symbole $i$. On suppose également que le canal est constant sur deux temps symboles consécutifs à savoir :

$$h_{mn}(i) = h_{mn}(i+1), i \in \begin{bmatrix} 0, 2, 4, \cdots \end{bmatrix},$$

On peut notamment représenter le codage espace-temps par le tableau suivant, en considérant Ts un temps symbole :

|  | Antenne 841 | Antenne 842 | Antenne 843 | Antenne 844 |
|---|---|---|---|---|
| t = $i$ Ts | $s_1$ | $s_2$ | $s_3$ | $s_4$ |
| t =($i$+1)Ts | $-s_2^*$ | $-s_1^*$ | $-s_4$ | $s_3^*$ |

La matrice de canal $H$ équivalente utilisée par le récepteur itératif est alors de la forme :

$$H = \begin{bmatrix} \mathbf{H}[i] & 0 & \cdots & 0 \\ 0 & \mathbf{H}[i+2] & \ddots & 0 \\ \vdots & \ddots & \ddots & \vdots \\ 0 & 0 & \cdots & \mathbf{H}\left[i+2\left(\frac{L}{4}-1\right)\right] \end{bmatrix}, \; H \in C^{L \times L}$$

avec :

$$\mathbf{H}[i] = \begin{bmatrix} h_{11}(i) & h_{21}(i) & h_{31}(i) & h_{41}(i) \\ h_{12}(i) & h_{22}(i) & h_{32}(i) & h_{42}(i) \\ h_{21}^*(i+1) & -h_{11}^*(i+1) & h_{41}^*(i+1) & -h_{31}^*(i+1) \\ h_{22}^*(i+1) & -h_{12}^*(i+1) & h_{42}^*(i+1) & -h_{32}^*(i+1) \end{bmatrix}, \; \mathbf{H}[i] \in C^{4 \times 4}$$

Le vecteur $r$ utilisé dans le procédé itératif de réception, correspondant au signal reçu, est alors de la forme :

$$r = \left[ r_1(i) \quad r_2(i) \quad r_1^*(i+1) \quad r_2^*(i+1) \quad \cdots \quad r_1(i+\frac{L}{2}-2) \quad r_2(i+\frac{L}{2}-2) \quad r_1^*(i+\frac{L}{2}-1) \quad r_2^*(i+\frac{L}{2}-1) \right]^T$$

avec $r \in C^{L \times 1}$.

On constate ainsi par le biais de ces différents modes de réalisation que la matrice équivalente de canal peut représenter à la fois un multiplexage spatial, et/ou un multiplexage temporel, ... Cette matrice de canal peut également prendre en compte d'autres traitements mis en oeuvre au niveau d'un émetteur, et tenir compte de l'interférence entre symboles.

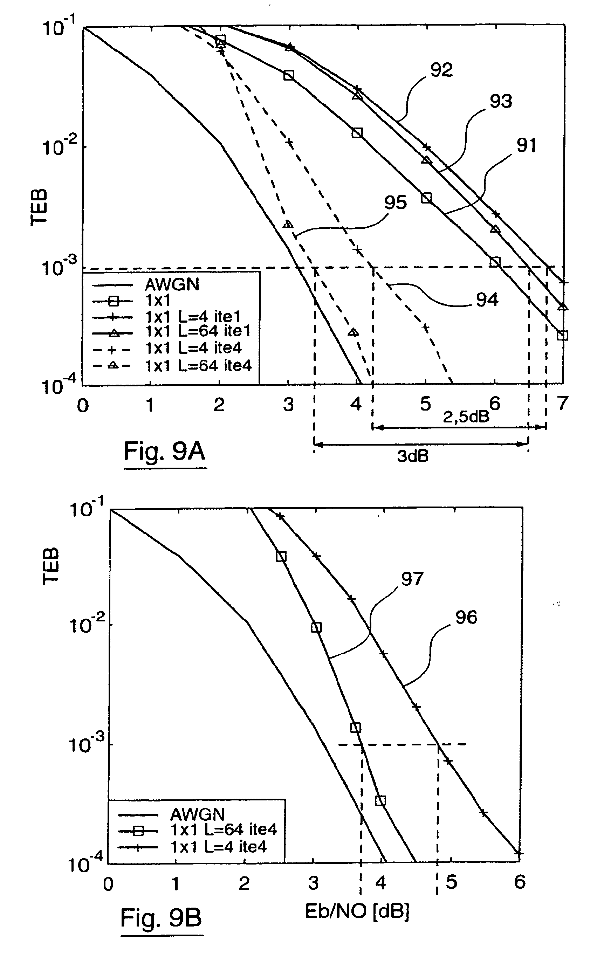

On présente désormais, en relation avec les figures 9A et 9B les performances de l'invention par rapport aux solutions de l'art antérieur pour un système SISO (9A) et pour un système MIMO (9B).

Le codage de canal utilisé pour ces deux systèmes est de type convolutif, et présente un rendement R égal à 1/2, et une longueur de contrainte K égale à 5.

Les courbes de la figure 9A correspondent à un système SISO présentant une seule antenne d'émission et une seule antenne de réception, comme illustré en figure 8A.

La courbe 1x1, référencée 91, présente le taux d'erreur binaire (TEB) en fonction du rapport Eb/N0 (correspondant au rapport entre l'énergie dépensée par bit transmis et la densité spectrale du bruit blanc), pour un système de l'art antérieur sans précodage, mettant en oeuvre un codage de canal.

Les courbes 1x1 L=4 ite1 et 1x1 L=64 ite 1, référencées respectivement 92 et 93, présentent les performances d'un système de l'art antérieur tel que présenté par V. Le Nir, M. Hélard et R. Legouable, dans "Technique de précodage et de codage espace-temps" (demande de brevet FR 02 16200, déposée le 16 décembre 2002 au nom du même Déposant). Un tel système ne met pas en oeuvre un procédé de réception itératif, et comprend en réception un déprécodeur linéaire concaténé avec un décodeur de canal, pour une longueur de précodage L=4 (courbe 92) ou L=64 (courbe 93).

Finalement, les courbes 1x1 L=4 ite4 et 1x1 L=64 ite4, référencées respectivement 94 et 95, présentent les performances d'un système selon l'invention, mettant en oeuvre un procédé de réception itératif à 4 itérations.

On peut ainsi observer un gain d'environ 2,5 dB entre la courbe 1x1 L=4 ite1 (92), qui correspond à un système mettant en oeuvre une seule itération et la courbe 1x1 L=4 ite4 (94), qui correspond à un système mettant en oeuvre quatre itérations, lorsque le taux d'erreur binaire (TEB) est de $10^{-3}$, avec une longueur de précodage L=4.

On observe également un gain d'environ 3 dB entre la courbe 1x1 L=64 ite1 (93), qui correspond à un système mettant en oeuvre une seule itération et la courbe 1x1 L=4 ite64 (95), qui correspond à un système mettant en oeuvre quatre itérations, lorsque le taux d'erreur binaire (TEB) est de $10^{-3}$, avec une longueur de précodage L=64.

On constate ainsi que les performances en réception sont améliorées lorsque la taille du précodage augmente et/ou lorsque le nombre d'itérations augmente.

Les courbes de la figure 9B présentent les performances d'un système à multiplexage spatial de type MIMO présentant quatre antennes d'émission et quatre antennes de réception, et mettant en oeuvre le procédé de réception selon l'invention.

On observe ainsi sur cette figure les courbes 4x4 L=4 ite4 et 4x4 L=64 ite4, référencées respectivement 96 et 97, correspondant à la mise en oeuvre d'un procédé de réception itératif à 4 itérations pour une longueur de précodage L=4 (courbe 96) ou L=64 (courbe 97).

On remarque que les performances obtenues pour une longueur de précodage L=64 (courbe référencée 97) sont sensiblement meilleures que celles correspondant à une longueur de précodage L=4 (courbe référencée 96).

On observe ainsi un gain d'environ 1,5 dB entre ces deux courbes, lorsque le taux d'erreur binaire (TEB) est de $10^{-3}$.

Ainsi, un système mettant en oeuvre le procédé de réception de l'invention présente de très bonnes performances, comparables à celles obtenues avec un détecteur de type maximum de vraisemblance en réception, tout en conservant une complexité réduite.

On notera que l'invention ne se limite pas à une implantation purement matérielle mais qu'elle peut aussi être mise en oeuvre sous la forme d'une séquence d'instructions d'un programme informatique ou toute forme mixant une partie matérielle et une partie logicielle. Dans le cas où l'invention est implantée partiellement ou totalement sous forme logicielle, la séquence d'instructions correspondante pourra être stockée dans un moyen de stockage amovible (tel que par exemple une disquette, un CD-ROM ou un DVD-ROM) ou non, ce moyen de stockage étant lisible partiellement ou totalement par un ordinateur ou un microprocesseur.

## Revendications

1. Procédé de réception d'un signal de données ayant subi, avant émission, un précodage linéaire à aide d'une matrice de précodage unitaire, et un codage de canal,
   **caractérisé en ce qu'**il comprend au moins une itération (Itep) d'amélioration d'une estimation du signal reçu (r) en fonction dudit signal reçu et d'une estimation précédente dudit signal reçu ($3^{(p-1)}$)
   ladite itération comprenant les étapes suivantes :

   - estimation (73) de l'interférence due notamment audit précodage linéaire et affectant ledit signal reçu, en fonction de ladite estimation précédente, de façon à obtenir une interférence estimée ;
   - soustraction (74) de ladite interférence estimée audit signal reçu, préalablement filtré et déprécodé, de façon à obtenir un signal amélioré ;
   - égalisation (75) dudit signal amélioré, délivrant un signal égalisé;
   - estimation (76) dudit signal reçu, délivrant une estimation ($\hat{5}^{(p)}$) du signal reçu.

2. Procédé de réception selon la revendication 1, **caractérisé en ce que** ladite étape d'estimation de l'interférence met en oeuvre une multiplication de ladite estimation précédente par une matrice d'interférences tenant compte notamment d'une matrice transposée conjuguée d'une matrice représentative du canal de transmission dudit signal reçu et d'une matrice transposée conjuguée de ladite matrice de précodage.

3. Procédé de réception selon l'une quelconque des revendications 1 et 2, **caractérisé en ce que**, dans chacune desdites itérations, ledit filtrage du signal reçu est mis en oeuvre par multiplication dudit signal reçu par une matrice de filtrage transposée conjuguée d'une matrice représentative notamment du canal de transmission.

4. Procédé de réception selon l'une quelconque des revendications 1 à 3, **caractérisé en ce que** ladite estimation précédente est délivrée par l'itération précédente pour toutes les itérations sauf la première, et par une étape d'estimation préliminaire pour la première itération.

5. Procédé de réception selon la revendication 4, **caractérisé en ce que** ladite étape d'estimation préliminaire comprend les étapes suivantes :

- égalisation globale, par multiplication dudit signal reçu par une matrice d'égalisation globale diagonalisée, représentative du canal de transmission dudit signal reçu et de ladite matrice de précodage ;
- estimation dudit signal reçu, délivrant une estimation du signal reçu.

**6.** Procédé de réception selon la revendication 4, **caractérisé en ce que** ladite étape d'estimation préliminaire comprend les étapes suivantes :

- égalisation de canal, par multiplication dudit signal reçu par une matrice transposée conjuguée d'une matrice représentative du canal de transmission dudit signal reçu, délivrant un signal égalisé ;
- déprécodage, par multiplication dudit signal égalisé par une matrice transposée conjuguée de ladite matrice de précodage ;
- estimation dudit signal reçu, délivrant une estimation du signal reçu.

**7.** Procédé de réception selon l'une quelconque des revendications 1 à 6, **caractérisé en ce qu'**au moins une desdites étapes d'estimation du signal reçu délivre d'une part une estimation binaire dudit signal reçu, et d'autre part une estimation pondérée dudit signal reçu, ladite estimation pondérée étant utilisée pour l'itération suivante, si cette dernière existe.

**8.** Procédé de réception selon l'une quelconque des revendications 1 à 7, **caractérisé en ce que** lesdites étapes d'estimation comprennent au moins certaines des opérations suivantes :

- transformation des bits en symboles, ou « mapping » ;
- désentrelacement ;
- décodage de canal ;
- ré-entrelacement ,
- « mapping » souple.

**9.** Procédé de réception selon l'une quelconque des revendications 1 à 8, **caractérisé en ce que** ledit signal reçu est émis par et/ou est reçu sur au moins deux antennes.

**10.** Procédé de réception selon la revendication 9, **caractérisé en ce que** ledit signal reçu a subi, à l'émission, un codage espace-temps, et **en ce qu'**il met en oeuvre un décodage de canal à l'aide d'une matrice pleine.

**11.** Procédé selon les revendications 3 et 10, **caractérisé en ce que** ladite matrice de filtrage tient compte du canal de transmission et dudit codage espace-temps.

**12.** Procédé selon l'une quelconque des revendications 1 à 11, **caractérisé en ce que**, pour au moins une itération, il met en oeuvre une estimation du canal tenant compte d'au moins une desdites estimations précédentes.

**13.** Procédé selon l'une quelconque des revendications 1 à 12, **caractérisé en ce qu'**il est mis en oeuvre dans un système multi-utilisateurs de type MC-CDMA.

**14.** Dispositif de réception d'un signal de données ayant subi, avant émission, un précodage linéaire, à l'aide d'une matrice de précodage unitaire, et un codage de canal,
**caractérisé en ce qu'**il comprend des moyens d'amélioration d'une estimation du signal reçu (r), en fonction dudit signal reçu et d'une estimation précédente ($3^{(p-1)}$) dudit signal reçu, mettant en oeuvre au moins une fois, sous la forme d'une itération

- des moyens d'estimation de l'interférence (73) due notamment audit précodage linéaire et affectant ledit signal reçu, en fonction de ladite estimation précédente, de façon à obtenir une interférence estimée ;
- des moyens de soustraction (74) de ladite interférence estimée audit signal reçu, préalablement filtré et déprécodé, de façon à obtenir un signal amélioré ;
- des moyens d'égalisation (75) dudit signal amélioré, délivrant un signal égalisé ;
- des moyens d'estimation (76) dudit signal reçu, délivrant une estimation ($\hat{s}^{(p)}$) du signal reçu.

**15.** Produit programme d'ordinateur **caractérisé en ce que** ledit programme comprend des séquences d'instructions adaptées à la mise en oeuvre d'un procédé de réception selon l'une quelconque des revendications 1 à 13 lorsque ledit programme est exécuté sur un ordinateur.

**Claims**

1. Method for receiving a data signal having undergone, before transmission, a linear precoding, using a unitary precoding matrix, and a channel coding, **characterized in that** it comprises at least one iteration (Ite p) for enhancing an estimation of the received signal (r), on the basis of said received signal and a preceding estimation of said received signal ($\hat{s}^{(p-1)}$)

   said iteration comprising the following steps:

   - estimation (73) of the interference due in particular to said linear precoding and affecting said received signal, on the basis of said preceding estimation, so as to obtain an estimated interference;
   - subtraction (74) of said estimated interference from said received signal, previously filtered and deprecoded, so as to obtain an enhanced signal;
   - equalization (75) of said enhanced signal, delivering an equalized signal;
   - estimation (76) of said received signal, delivering an estimation ($\hat{s}^{(p)}$) of the received signal.

2. Reception method according to Claim 1, **characterized in that** said interference estimation step implements a multiplication of said preceding estimation by an interference matrix taking into account in particular a conjugate transpose matrix of a matrix representative of the transmission channel of said received signal and a conjugate transpose matrix of said precoding matrix.

3. Reception method according to any one of Claims 1 and 2, **characterized in that**, in each of said iterations, said filtering of the received signal is implemented by multiplication of said received signal by a conjugate transpose filtering matrix of a matrix representative in particular of the transmission channel.

4. Reception method according to any one of Claims 1 to 3, **characterized in that** said preceding estimation is delivered by the preceding iteration for all the iterations except the first, and by a preliminary estimation step for the first iteration.

5. Reception method according to Claim 4, **characterized in that** said preliminary estimation step comprises the following steps:

   - global equalization, by multiplication of said received signal by a diagonalized global equalization matrix, representative of the transmission channel of said received signal and of said precoding matrix;
   - estimation of said received signal, delivering an estimation of the received signal.

6. Reception method according to Claim 4, **characterized in that** said preliminary estimation step comprises the following steps:

   - channel equalization, by multiplication of said received signal by a conjugate transpose matrix of a matrix representative of the transmission channel of said received signal, delivering an equalized signal;
   - deprecoding, by multiplication of said equalized signal by a conjugate transpose matrix of said precoding matrix;
   - estimation of said received signal, delivering an estimation of the received signal.

7. Reception method according to any one of Claims 1 to 6, **characterized in that** at least one of said steps of estimation of the received signal delivers, on the one hand, a binary estimation of said received signal, and, on the other hand, a weighted estimation of said received signal, said weighted estimation being used for the next iteration, if the latter exists.

8. Reception method according to any one of Claims 1 to 7, **characterized in that** said estimation steps comprise at least some of the following operations:

   - transformation of the bits into symbols, or "mapping";
   - deinterleaving;
   - channel decoding;
   - reinterleaving;
   - flexible "mapping".

9. Reception method according to any one of Claims 1 to 8, **characterized in that** said received signal is transmitted by and/or is received on at least two antennas.

**10.** Reception method according to Claim 9, **characterized in that** said received signal has undergone, on transmission, a space-time coding, and **in that** it implements a channel decoding using a full matrix.

**11.** Method according to Claims 3 and 10, **characterized in that** said filtering matrix takes account of the transmission channel and of said space-time coding.

**12.** Method according to any one of Claims 1 to 11, **characterized in that**, for at least one iteration, it implements an estimation of the channel taking account of at least one of said preceding estimations.

**13.** Method according to any one of Claims 1 to 12, **characterized in that** it is implemented in a multi-user system of MC-CDMA type.

**14.** Device for receiving a data signal having undergone, before transmission, a linear precoding, using a unitary precoding matrix, and a channel coding, **characterized in that** it comprises means for enhancing an estimation of the received signal (r), on the basis of said received signal and a preceding estimation ($\hat{s}^{(p-1)}$) of said received signal, implementing at least once, in the form of an iteration:

- means for estimating the interference (73) due in particular to said linear precoding and affecting said received signal, on the basis of said preceding estimation, so as to obtain an estimated interference;
- means for subtracting (74) said estimated interference from said received signal, previously filtered and precoded, so as to obtain an enhanced signal;
- means for equalizing (75) said enhanced signal, delivering an equalized signal;
- means for estimating (76) said received signal, delivering an estimation ($\hat{s}^{(p)}$) of the received signal.

**15.** Computer program product, **characterized in that** said program comprises sequences of instructions suitable for implementing a reception method according to any one of Claims 1 to 13 when said program is run on a computer.

**Patentansprüche**

**1.** Verfahren zum Empfang eines Datensignals, das vor dem Senden mit Hilfe einer einzigen Vorcodierungsmatrix eine lineare Vorcodierung und eine Kanalcodierung erfahren hat,
**dadurch gekennzeichnet, dass** es mindestens eine Iteration (Ite p) zur Verbesserung einer Schätzung des empfangenen Signals (r) abhängig von dem empfangenen Signal und einer vorhergehenden Schätzung des empfangenen Signals ($\hat{s}^{(p-1)}$) enthält, wobei die Iteration die folgenden Schritte enthält:

- Schätzung (73) der Interferenz aufgrund insbesondere der linearen Vorcodierung und sich auf das empfangene Signal auswirkend, abhängig von der vorhergehenden Schätzung, um eine geschätzte Interferenz zu erhalten;
- Subtraktion (74) der geschätzten Interferenz vom empfangenen Signal, das vorher gefiltert und entvorcodiert wurde, um ein verbessertes Signal zu erhalten;
- Entzerrung (75) des verbesserten Signals, die ein entzerrtes Signal liefert;
- Schätzung (76) des empfangenen Signals, die eine Schätzung ($\hat{s}^{(p)}$) des empfangenen Signals liefert.

**2.** Empfangsverfahren nach Anspruch 1, **dadurch gekennzeichnet, dass** der Schritt der Schätzung der Interferenz eine Multiplikation der vorhergehenden Schätzung mit einer Matrix von Interferenzen durchführt, unter Berücksichtigung insbesondere einer konjugierten transponierten Matrix einer für den Übertragungskanal des empfangenen Signals repräsentativen Matrix und einer konjugierten transponierten Matrix der Vorcodierungsmatrix.

**3.** Empfangsverfahren nach einem der Ansprüche 1 und 2, **dadurch gekennzeichnet, dass** in jeder der Iterationen die Filterung des empfangenen Signals durch Multiplikation des empfangenen Signals mit einer konjugierten transponierten Filtermatrix einer für insbesondere den Übertragungskanal repräsentativen Matrix durchgeführt wird.

**4.** Empfangsverfahren nach einem der Ansprüche 1 bis 3, **dadurch gekennzeichnet, dass** die vorhergehende Schätzung durch die vorhergehende Iteration für alle Iterationen außer der ersten und durch einen Schritt der Vorschätzung für die erste Iteration geliefert wird.

**5.** Empfangsverfahren nach Anspruch 4, **dadurch gekennzeichnet, dass** der Schritt der Vorschätzung die folgenden Schritte enthält:

- globale Entzerrung durch Multiplikation des empfangenen Signals mit einer diagonalisierten globalen Entzerrungsmatrix, die für den Übertragungskanal des empfangenen Signals und die Vorcodierungsmatrix repräsentativ ist;
- Schätzung des empfangenen Signals, die eine Schätzung des empfangenen Signals liefert.

**6.** Empfangsverfahren nach Anspruch 4, **dadurch gekennzeichnet, dass** der Schritt der Vorschätzung die folgenden Schritte enthält:

- Kanalentzerrung durch Multiplikation des empfangenen Signals mit einer konjugierten transponierten Matrix einer für den Übertragungskanal des empfangenen Signals repräsentativen Matrix, die ein entzerrtes Signal liefert;
- Entvorcodierung durch Multiplikation des entzerrten Signals mit einer konjugierten transponierten Matrix der Vorcodierungsmatrix;
- Schätzung des empfangenen Signals, die eine Schätzung des empfangenen Signals liefert.

**7.** Empfangsverfahren nach einem der Ansprüche 1 bis 6, **dadurch gekennzeichnet, dass** mindestens einer der Schritte der Schätzung des empfangenen Signals einerseits eine binäre Schätzung des empfangenen Signals und andererseits eine gewichtete Schätzung des empfangenen Signals liefert, wobei die gewichtete Schätzung für die folgende Iteration verwendet wird, falls diese existiert.

**8.** Empfangsverfahren nach einem der Ansprüche 1 bis 7, **dadurch gekennzeichnet, dass** die Schritte der Schätzung mindestens bestimmte der folgenden Vorgänge enthalten:

- Umwandlung der Bits in Symbole, oder «Mapping»;
- Entschachtelung;
- Kanaldecodierung;
- erneute Verschachtelung;
- Soft-«Mapping».

**9.** Empfangsverfahren nach einem der Ansprüche 1 bis 8, **dadurch gekennzeichnet, dass** das empfangene Signal auf mindestens zwei Antennen gesendet und/oder empfangen wird.

**10.** Empfangsverfahren nach Anspruch 9, **dadurch gekennzeichnet, dass** das empfangene Signal beim Senden eine Raum-Zeit-Codierung erfahren hat, und dass es eine Kanaldecodierung mit Hilfe einer gefüllten Matrix durchführt.

**11.** Verfahren nach den Ansprüchen 3 und 10, **dadurch gekennzeichnet, dass** die Filtermatrix den Übertragungskanal und die Raum-Zeit-Codierung berücksichtigt.

**12.** Verfahren nach einem der Ansprüche 1 bis 11, **dadurch gekennzeichnet, dass** es für mindestens eine Iteration eine Schätzung des Kanals unter Berücksichtigung mindestens einer der vorhergehenden Schätzungen durchführt.

**13.** Verfahren nach einem der Ansprüche 1 bis 12, **dadurch gekennzeichnet, dass** es in einem Mehrnutzersystem der Art MC-CDMA durchgeführt wird.

**14.** Vorrichtung zum Empfang eines Datensignals, das vor dem Senden mit Hilfe einer einzigen Vorcodierungsmatrix eine lineare Vorcodierung und eine Kanalcodierung erfahren hat, **dadurch gekennzeichnet, dass** sie Einrichtungen zur Verbesserung einer Schätzung des empfangenen Signals (r) abhängig von dem empfangenen Signal und einer vorhergehenden Schätzung ($\hat{s}^{(p-1)}$) des empfangenen Signals enthält, die mindestens einmal in Form einer Iteration anwenden:

- Einrichtungen zur Schätzung der Interferenz (73) aufgrund insbesondere der linearen Vorcodierung und sich auf das empfangene Signal auswirkend, abhängig von der vorhergehenden Schätzung, um eine geschätzte Interferenz zu erhalten;
- Einrichtungen zur Subtraktion (74) der geschätzten Interferenz vom empfangenen Signal, das vorher gefiltert und entvorcodiert wurde, um ein verbessertes Signal zu erhalten;
- Einrichtungen zur Entzerrung (75) des verbesserten Signals, die ein entzerrtes Signal liefern;
- Einrichtungen zur Schätzung (76) des empfangenen Signals, die eine Schätzung ($\hat{s}^{(p)}$) des empfangenen Signals liefern.

15. Computerprogrammprodukt, **dadurch gekennzeichnet, dass** das Programm Folgen von Anweisungen enthalt, die für die Durchführung eines Empfangsverfahrens nach einem der Ansprüche 1 bis 13 geeignet sind, wenn das Programm auf einem Computer ausgeführt wird.

$\underline{\Delta}$ → | Mapping | → | Précodage linéaire | Y

Y | Déprécodage ML | → | (Mapping)$^{-1}$ | → $\hat{\underline{\Delta}}$

11    12    <u>Fig. 1</u>

$\underline{\Delta}$ → | Mapping | → | Précodage linéaire | → | Codage espace / temps | Y Y

21    22

Y | (Codage espace / temps)$^{-1}$ | → | Déprécodage linéaire | → | (Mapping)$^{-1}$ | → $\hat{\underline{\Delta}}$

23

<u>Fig. 2</u>

d → | Codeur canal | → | Entrelaceur | → | Mapper | → | Précodage linéaire espace / temps | Y Y

31    32    33    34

Y Y | Démapper espace / temps ML | → | Désentrelaceur | → | Décodeur canal | → $\hat{d}^{(p)}$

35    36

| Entrelaceur |

<u>Fig. 3</u>

d → | Codage canal | → | Entrelaceur | → | Mapper | → | Précodage linéaire | Y

41    42

Y → | Déprécodeur / démapper ML | → | Désentrelaceur | → | Décodeur canal | → $\hat{d}^{(p)}$

43    44

| Entrelaceur |

## Fig. 4

51

r → | Ite1 | → $\hat{d}^{(1)}$

$\hat{s}^{(1)}$

52

| Ite2 | → $\hat{d}^{(2)}$

$\hat{s}^{(2)}$

$\hat{s}^{(p-1)}$

53

| Ite p | → $\hat{d}^{(p)}$

→ $\hat{s}^{(p)}$

## Fig. 5

r → | Egalisation globale | $\tilde{s}^{(1)}$ → | Estimation | → $\hat{d}^{(1)}$
→ $\hat{s}^{(1)}$

51

61

62

## Fig. 6A

r → | Egalisation canal | $\bar{s}^{(1)}$ → | Déprécodage | $\tilde{s}^{(1)}$ → | Estimation | → $\hat{d}^{(1)}$
→ $\hat{s}^{(1)}$

51

63

64

62

## Fig. 6B

$\hat{s}^{(p-1)}$ → | Création interférences |

73

r → | Filtre adapté | → | Déprécodage | → ⊕ (−/+) → | Egalisation | → | Estimation | → $\hat{d}^{(p)}$
→ $\hat{s}^{(p)}$

71

72

74

75

76

## Fig. 7

h (i)

811

s (i)

810

r (i)

Fig. 8A

825

821

$s_1$ $s_2$

Mux

$s_1$

$s_2$

822

$h_{11}$ (i)

$h_{12}$ (i)

$h_{21}$ (i)

$h_{22}$ (i)

823

826

$r_1(i)$

$r_2(i)$

824

Demux

Fig. 8B

834

831

$s_1$ $s_2$

Codage
espace-temps

$h_1$ (i)

$h_2$ (i)

833

832

r (i)

Fig. 8C

$$\underline{\text{Fig. 8D}}$$

Fig. 9A

Fig. 9B

$d_1$ → | Codage canal | → | Entrelaceur | → | Mapper | →

101      102      103

$d_N$ → | Codage canal | → | Entrelaceur | → | Mapper | →

101      102      103      | FHT |      104

Fig. 10A

r → | Egalisation canal | → | Détection utilisateur n | → $\tilde{s}_n^{(1)}$ → | Estimation utilisateur n | → $\hat{d}_n^{(1)}$

63      106      107      → $\hat{s}_n^{(1)}$

Fig. 10B

$\hat{s}_1^{(p-1)}$ →
$\hat{s}_n^{(p-1)}$ →      | Création interférences utilisateurs autres que n |
$\hat{s}_N^{(p-1)}$ →

73

r → | Filtre adapté | → | Détection utilisateur n | + ⊕ - → | Egalisation | → | Estimation utilisateur n | → $\hat{d}_n^{(p)}$

71      105      74      75      108      → $\hat{s}_n^{(p)}$

Fig. 10C

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- FR 0216200

**Littérature non-brevet citée dans la description**

- **J. J. BOUTROS ; E. VITERBO.** Signal space diversity, a power and bandwidth efficient diversity technique for the rayleigh fading channel. *IEEE Trans. Commun.,* Juillet 1998, vol. 44 (4), 1453-1467
- **A. STAMOULIS ; Z. LIU ; G. B. GIANNAKIS.** Space-time block-coded with linear precoding for multirate services. *IEEE Trans. Signal Processing,* Janvier 2002, vol. 50 (1), 119-129
- **J. J. BOUTROS ; N. BRESSET ; L. BRUNEL.** Turbo coding and decoding for multiple antenna channels. *International Symposium on Turbo Codes and Related topics,* Septembre 2003
- **Z. WANG ; S. ZHOU ; G. B. GIANNAKIS.** Joint coding-precoding with low complexity turbo-decoding. *IEEE transactions on wireless communications,* Mai 2004, vol. 3 (3
- **M. DEBBAH ; P. LOUBATON ; M. DE COURVILLE.** The Spectral Efficiency of Linear Precoders. *Proceedings of the IEEE Information Theory Workshop,* 31 Mars 2003